Europäisches Patentamt

European Patent Office

Office européen des brevets

(19)

(11) Veröffentlichungsnummer: **0 263 335 B1**

(12) **EUROPÄISCHE PATENTSCHRIFT**

(45) Veröffentlichungstag der Patentschrift: 21.08.91

(51) Int. Cl.⁵: **A23L 1/221**, A21D 17/00, A21D 8/04, A23L 1/23

(21) Anmeldenummer: 87113600.8

(22) Anmeldetag: 17.09.87

(54) Verfahren zur Herstellung eines wasserlöslichen Extraktes mit brotigem Aroma und Vorrichtung zur Durchführung des Verfahrens.

(30) Priorität: 07.10.86 CH 4003/86

(43) Veröffentlichungstag der Anmeldung:
13.04.88 Patentblatt 88/15

(45) Bekanntmachung des Hinweises auf die
Patenterteilung:
21.08.91 Patentblatt 91/34

(84) Benannte Vertragsstaaten:
AT BE CH DE ES FR GB IT LI LU NL SE

(56) Entgegenhaltungen:
EP-A- 0 111 742          CH-A- 586 516
FR-A- 2 065 833          GB-A- 2 126 071
US-A- 3 466 174          US-A- 3 485 641

(73) Patentinhaber: SOCIETE DES PRODUITS
NESTLE S.A.
Case postale 353
CH-1800 Vevey(CH)

(72) Erfinder: Spies, Gerhard
Hermann-Hesse-Strasse 19
W-7140 Ludwigsburg(DE)

**Beschreibung**

Die Erfindung betrifft ein Verfahren zur Herstellung eines wasserlöslichen Extraktes mit brotigem Aroma, und die Vorrichtung zur Durchführung des Verfahrens.

Produkte auf Basis von Brotaroma gewinnen heutzutage immer mehr an Bedeutung. Das Dokument "Lebensmittel Lexikon" (1979), S. 494-495, betrifft nämlich ein Getränk auf Basis von getrocknetem Brot, das durch eine Nachgärung hergestellt wird. Dieses Getränk ist aber in flüssiger Form. Es wäre deswegen interessant, einen kräftigen Brotgeschmack aufweisenden Extrakt in Pulverform herstellen zu können, der entweder als solches oder als Zusatz verwendet werden könnte. In diesem Bereich existiert bis heute noch nichts.

Der Erfindung liegt die Aufgabe zugrunde, einen Extrakt herstellen zu können, der aus Brot als Ausgangsmaterial fabriziert wird.

Die Erfindung betrifft ein Verfahren zur Herstellung eines wasserlöslichen Extrakt mit brotigem Aroma, indem man Brot bäckt, zerkleinert, im Wasser mit mindestens einem Enzym verflüssigt, die erhaltene Brotmaische einer Aufschlämmungs-Extraktion unterzieht, dann eine Wasserdampfdestillation durchführt, um ein anfallendes Destillat mit den leicht flüchtigen Aromen aufzufangen, die nicht gelösten Feststoffe separiert und den geklärten Extrakt eindampft, und schliesslich das Destillat mit dem eingedampften Extrakt trocknet.

Das Brot wird nach herkömmlicher Weise aus Wasser, Mehl, Salz, Hefe und eventuell Gewürzmischung für Brot zubereitet. Um ein möglichst trockenes Produkt mit intensiven Geschmack zu erhalten, ist es notwendig, dünne flache Fladen zu formen. Die Fladen werden dann zwischen 220° und 250°C gebacken. Am Ende des Prozesses reduziert man die Temperatur auf 150-200°C.

Das gebackene Brot weist einen Trockensubstanzgehalt zwischen 80 und 99 %, einen Stärkegehalt zwischen 70 und 75 % und einen Gehalt an reduzierendem Zucker zwischen 3,5 und 5,5 %, bezogen auf Trockensubstanz auf.

Das Brot wird dann feingemahlen und mit Wasser angemaischt in einem Gewichtsverhältnis Brot zu Wasser zwischen 1:1 und 1:10. Zehnmal mehr Wasser in der Maische ist die obere Grenze, denn mit zuviel Wasser arbeitet man in unwirtschaftlicher Weise und die Ausbeute ist zu gering. Die Maische wird auf etwa 35-80°C temperiert, danach erfolgt die Enzymzugabe. Die Funktion dieser Zugabe ist die Verflüssigung des Brotes. Die Enzyme bauen weitestgehend die Gerüststruktur der Brotkrume und die Brotkruste ab. Dies führt zu einer verbesserten Auflösung des Brotes im Wasser und zu einer Viskositätsabsenkung der Maische. Zu diesem Zweck sind Enzyme geeignet, die zur Gruppe der Stärke-, Pentosanund Glucanabbauenden zählen. Vorzugsweise verwendet man $\propto$-Amylase und $\beta$-Glucanase. Die Menge der zugesetzten Enzyme liegt zwischen 0,05 und 1 % auf Gewicht bezogen in der Trockensubstanz. Eine Zugabe von mehr als 1 % bringt keine weiteren Vorteile bei der Verflüssigung. Bei der Verflüssigung wird hauptsächlich Stärke zu Dextrinen und niedermolekularen Zuckern abgebaut. Die Einwirkdauer der Enzyme beträgt zwischen 10 bis 30 Minuten. Eine Behandlung von mehr als 30 Minuten bringt eine negative Geschmacksänderung.

Das verflüssigte Brot hat einen Trockensubstanzgehalt zwischen 13 und 17 %, einen Stärkegehalt zwischen 45 und 50 % und einen Gehalt an reduzierendem Zucker zwischen 25 und 30 %, bezogen auf Trockensubstanz.

Bei der im Anschluss daran durchgeführten Aufschlämmung-Extraktion werden die zugesetzten Enzyme inaktiviert. Die zweite Funktion dieser Aufschlämmungs-Extraktion ist die Aromagewinnung: Die im Wasser löslichen Brotaromastoffe gehen bei dieser Behandlung in die wässrige Phase über. Die verflüssigte Brotmaische wird aufgeheizt und durch ein Rohrsystem gepumpt. Die Aufheizung erfolgt mittels Dampfinjektion beim Eintritt in den Aufschlämmungs-Extraktor. Die Extraktionstemperatur beträgt zwischen 90 und 150°C, die Verweilzeit im Reaktor liegt bei 15 bis 30 Minuten. Diese Parameter werden von der Länge des Extraktors und dem gewähltem Durchsatz bestimmt.

Im Anschluss daran efolgt eine Wasserdampfdestillation, das sog. "Strippen". Die Maische wird bei ca. 95° bis 98°C in einer Destillationskolonne im Gegenstrom mit Wasserdampf destilliert. Die zugeführte Wasserdampfmenge wird so eingestellt, dass die anfallende Destillatmenge etwa 25 Gew. % der Trockensubstanz des zu destillierenden Extrakts ergibt. Die Destillation wird durchgeführt, um Aromaverlust während des nachfolgenden Eindampfvorganges zu vermeiden.

Nach dem Strippen werden die nicht gelösten Feststoffe vom Extrakt abgetrennt. Dies wird in einem Separator durchgeführt. Man erhält einen geklärten Extrakt und den sog. Separatorrückstand. Der geklärte Extrakt wird danach in einer Eindampfanlage (z.B. Fallstrom- oder Plattenverdampfer) auf etwa 45 % TS (Trockensubstanz) eingedickt. Zur Schonung des Produkts wird vorzugsweise unter Vakuum bei etwa 55-70°C eingedampft. Obwohl es sich gezeigt hat, dass die Aromagewinnung wesentlich effizienter ist, wenn der nicht geklärte Extrakt gestrippt wird, d.h. wenn der Extrakt erst gestrippt und dann erst separiert wird, bleibt es trotzdem im Rahmen der Erfindung, die Separierung vor dem Strippen durchzuführen.

Es ist auch erfindungsgemäss möglich, das bei der Eindampfung anfallende Brüdenkondensat einer Umkehrosmosebehandlung zu unterwerfen, wobei der erhaltene Konzentrat zusammen mit dem Destillat und dem Extrakt getrocknet wird.

Gemäss einem bevorzugten Ausführungsform des Verfahrens, vermischt man den Separatorrückstand wieder mit Wasser, worauf die Mischung den vorher beschriebenen Prozess der Aromagewinnung ein zweites Mal durchläuft, d.h. Aufschlämmungs-Extraktion, Wasserdampfdestillation (Strippen), Separierung, Eindampfung und Umkehrosmose. Durch diese zweite Aromagewinnungsstufe erhält man einen neuen Extrakt, Destillat und Konzentrat. Die Extrakte, Destillate und Konzentrate der beiden Extraktionsstufen können beispielsweise in dem Verhältnis, in dem sie während des Prozesses anfallen, miteinander vermischt und in geeigneter Weise getrocknet werden. Man erhält ein wasserlösliches, helles Pulver mit typisch brotigem Aroma.

Durch diese zwei Stufen lässt sich eine höhere Ausbeute hinsichtlich Endproduktmenge und Geschmack des Endprodukts erreichen. Die Ausbeute des 1. Aromagewinnungsprozesses liegt zwischen 60 und 65 % und diejenige des 2. zwischen 40 und 45 %. Das gibt eine Gesamtausbeute zwischen 80 und 85 % (alle Werte bezogen auf eingesetzte Brot-Trockensubstanz).

Es ist auch möglich, das Verfahren ohne die Aufschlämmungs-Extraktion durchzuführen. Eine solche Variante is nicht bevorzugt, da die Aromaausbeute ungenügend ist.

Die Erfindung betrifft weiter die Vorrichtung zur Durchführung des Verfahrens. Sie besteht aus folgenden durch Rohre verbundenen Elementen:
- einem Maischbehälter für die Enzymbehandlung,
- einem Aufschlämmungs-Extraktor mit Mitteln zum Erhitzen und Druckhaltevorrichtung,
- einer Destillationskolonne,
- einem Separator,
- einem Eindampfer,
- einem Mittel zum Mischen und
- einem Mittel zum Trocknen

Ein Mittel zur Zerkleinerung des Brotes, z.B. eine Mühle, dient zur Vorbereitung des Brotes vor der Enzymbehandlung. Der Maischbehälter weist eine Pumpe zur Förderung der Maische in den Aufschlämmungs-Extraktor auf.

Im Aufschlämmungs-Extraktor, ist das Mittel zum Erhitzen vorzugsweise eine Dampfdüse und die Druckhaltevorrichtung ein Ventil.

Gemäss einer Variante weist die Vorrichtung zwischen dem Eindampfer und dem Mittel zum Mischen eine Umkehrosmosekolonne auf. Das Mittel zum Mischen ist vorzugsweise ein Mischbehälter und das Mittel zum Trocknen ein System zum Sprühtrocknen oder Gefriertrocknen.

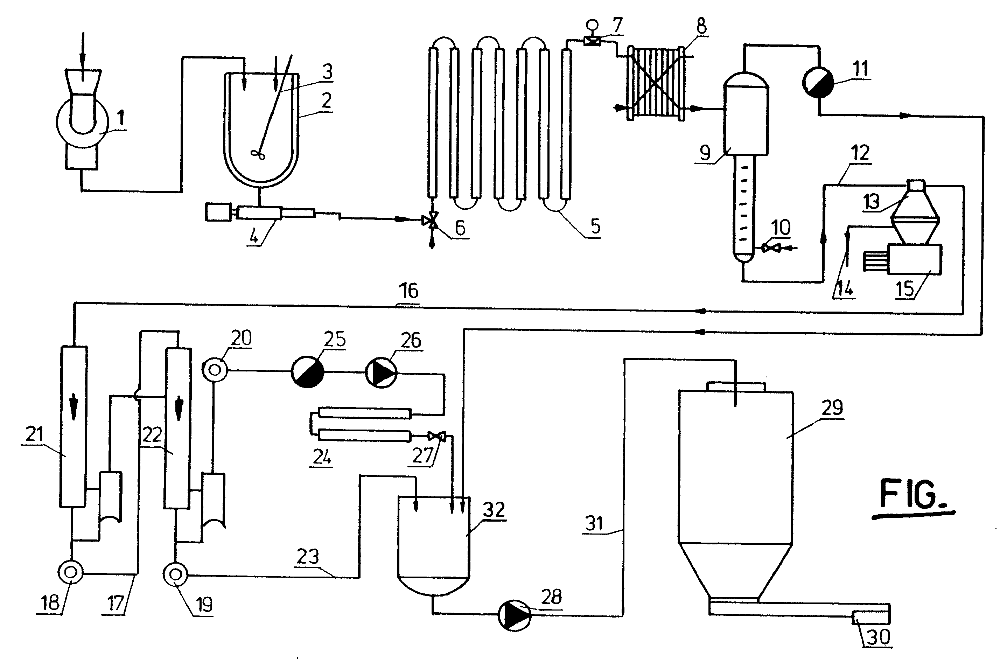

Die erfindungsgemässe Vorrichtung ist in Verbindung mit der einzigen Figur näher erläutert, die eine schematische Darstellung bildet.

Die Mühle (1) zerkleinert das Brot, das im mit einem Rührer (3) versehenen Maischbehälter (2) mit Wasser gemischt wird. Nach Enzymbehandlung in diesem Maischbehälter, fördert die Pumpe (4) die Maische in den Aufschlämmungs-Extraktor (5). Die Aufheizung erfolgt mittels Dampf durch eine Dampfdüse (6) beim Eintritt in den Aufschlämmungs-Extraktor. Die Druckhaltevorrichtung (7) gewährt einen guten Durchlauf des Produktes und die Aufrechterhaltung eines gewissen Druckes im Aufschlämmungs-Extraktor.

Das Mittel (8) zur Regulierung der Temperatur der Maische gewährt den Eintritt der Maische in die Destillationskolonne (9) so nahe wie möglich bei 95°-98°C. Durch die Dampfdüse (10) wird Dampf im Gegenstrom eingeleitet. Das Destillat wird durch den Kondensator (11) kondensiert und geht direkt in den Mischbehälter (32). Die wässrige Phase geht durch das Rohr (12) in den mit Motor (15) angetriebenen Separator (13), wo die nicht gelösten Feststoffe vom Extrakt abgetrennt werden. Der Separatorrückstand (14) wird nochmals mit Wasser vermischt und durchläuft ein zweites Mal die Vorrichtung. Der geklärte Extrakt geht durch das Rohr (16) in eine Eindampfanlage (17). Diese Anlage weist zwei Kolonnen (21, 22) auf und die Förderung des Extraktes geschieht mittels Pumpen (18, 19) durch Rohr (23), wobei er im Mischbehälter (32) mit dem Destillat gemischt wird. Der Dampf aus der Eindampfung geht durch Pumpe (20) gefördert in das Umkehrosmosesystem (24), wobei er vorher durch den Kondensator (25) kondensiert und durch die Pumpe (26) gefördert wird. Das erhaltene Konzentrat kommt durch das Ventil (27) heraus und wird im Mischbehälter (32) mit Extrakt und Destillat gemischt. Die gemischte Komponente geht durch Pumpe (28) gefördert durch Rohr (31) in den Sprühturm (29), wo sie getrocknet wird. Man erhält im unteren Teil (30) des Turmes den erfindungsgemässen wasserlöslichen Extrakt.

Ein Ausführungsbeispiel zur Herstellung des Extrakts wird im Folgenden beschrieben, wobei alle

3

Prozente Gewichtsprozente bedeuten.

Beispiel

Man bereitet einer herkömmlichen Mischbrotteig gemäss folgender Rezeptur:

```
42   % Wasser
26   % Roggenmehl Typ 1150
26   % Weizenmehl Typ 1050
 1,5 % Backhefe
 1,5 % Salz
 1   % Säuerungsmittel
 1   % Malzmehl
 1   % Gewürzmischung für Brot
```

Wie bei der konventionellen Brotherstellung werden die Zutaten gemischt und intensiv geknetet (ca. 10 Minuten).

Man lässt den Teig etwa 45 Minuten ruhen, knetet und formt ihn danach und lässt ihn nochmals 30 bis 45 Minuten ruhen. Die Ruhezeiten dienen der Vermehrung der Hefe, die durch die Produktion von $CO_2$, den Teig lockert und der Krume Struktur gibt.

Nach der ersten "Teigruhe" wird der Teig geformt. Um ein möglichst trockenes Produkt mit intensivem Geschmack zu erhalten, ist es zweckmässig, dünne, flache Fladen von ca. 0,5 cm Schichtdicke zu formen.

Der Backprozess wird so gewählt, dass ein Brot entsteht, das eine möglichst dicke Kruste aufweist. Zu diesem Zweck bäckt man zu Beginn mit hoher Temperatur (ca. 220° bis 250° C; Dauer 25-30 Minuten). Danach wird bei niedrigerer Temp. fertiggebacken (zwischen 150° C und 200° C; Dauer 30-40 Minuten). Man mahlt dann 45 kg Brot fein und mischt dieses mit 180 Liter Wasser bei ca. 95° C. Die Maische wird auf 75° C temperiert und man fügt 0,04 % ∝-Amylase und 0,1 % β-Glucanase bezogen auf Brot-TS hinzu. Man lässt die Enzyme 20 Minuten wirken. Die Maische wird dann mittels Dampf auf 110° C aufgeheizt und mit einer Pumpe bei einem Durchfluss von 100 L./St. in einen Aufschlämmungs-Extraktor geschickt. Dieser Extraktor umfasst fünf Rohre. Man hat dann 294 kg Maische mit 10,6 % TS, die mit einem Durchfluss von 80 L./St. bei 97-99° C durch die Wasserdampfdestillationskolonne geführt wird. Die zugeführte Wasserdampfmenge ist so eingestellt, dass man 7,65 kg Destillat erhält. Bei der Separierung bekommt man 52 kg festen Rückstand und eine Maische von 242 kg, die einzudampfen ist. Nach der Eindampfung erreicht man einen TS-Wert von 45 %, d.h. 57 kg Extrakt.

Der Rückstand von 52 kg wird mit 150 kg Wasser vermischt. Die Maische wird mittels Dampf auf 130° C erhitzt und geht bei einem Durchfluss von 100 L./St. durch den Aufschlämmungs-Extraktor. Wie in der ersten Stufe geht die Maische beim Austritt des Reaktors bei ca. 97-99° C in die Wasserdampfdestillationskolonne. Die zugeführte Wasserdampfmenge ist so eingestellt um 1,13 kg Destillat zu bekommen. Nach der Separierung erhält man 162 kg einer wässrigen Lösung die bis auf einen TS-Wert von 45 % eingedampft wird. Die Extrakte und Destillate der beiden Aromagewinnungsstufen werden vermischt und sprühgetrocknet: Man bekommt schliesslich 34 kg eines hellen Pulvers.

Dieses Pulver hat eine gute Löslichkeit im Wasser, enthält alle wasserlöslichen Aromastoffe des Brotes und findet interessante Verwendungen als Basis für Milkmodifier, für wässrige Aufgüsse und als Zusatz zu Baby-foods, und zu allen möglichen Lebensmittel vor allem Cerealienprodukten wie Brot, Müsli, Getreideflocken und -brei, um den Produkten eine ausgeprägte Brotnote zu verleihen. Der Geschmack kann durch verschiedene Zusätze, wie Gewürze und Aromen beliebig variiert werden.

**Patentansprüche**

1. Verfahren zur Herstellung eines wasserlöslichen Extraktes mit brotigem Aroma, dadurch gekennzeichnet dass man Brot bäckt, zerkleinert, im Wasser mit mindestens einem Enzym verflüssigt, die erhaltene

4

EP 0 263 335 B1

Brotmaische einer Aufschlämmungs-Extraktion unterzieht, dann eine Wasserdampfdestillation durchführt, um ein anfallendes Destillat mit den leicht flüchtigen Aromen aufzufangen, die nicht gelösten Feststoffe separiert und den geklärten Extrakt eindampft, und schliesslich das Destillat mit dem eingedampften Extrakt zusammen trocknet.

2. Verfahren gemäss Anspruch 1, dadurch gekennzeichnet, dass man als Enzym Stärke-, Pentosan- und Glucan-abbauende Enzyme verwendet.

3. Verfahren gemäss Anspruch 2, dadurch gekennzeichnet, dass man $\alpha$ -Amylase und $\beta$- Glucanase verwendet.

4. Verfahren gemäss den Ansprüchen 2 oder 3, dadurch gekennzeichnet, dass man zwischen 0,05 und 1 % Enzym verwendet.

5. Verfahren gemäss Ansprüchen 1 bis 4, dadurch gekennzeichnet, dass die Enzymbehandlung zwischen 10 und 30 Minuten dauert.

6. Verfahren gemäss Ansprüchen 1 bis 5, dadurch gekennzeichnet, dass das Verhältnis Brot zu Wasser auf Gewicht bezogen zwischen 1:1 und 1:10 liegt.

7. Verfahren gemäss Anspruch 1, dadurch gekennzeichnet, dass die Aufschlämmungs-Extraktion bei einer Temperatur zwischen 90° und 150° C und während 15 bis 30 Minuten durchgeführt wird.

8. Verfahren gemäss Anspruch 1, dadurch gekennzeichnet, dass bei der Wasserdampfdestillation die Wasserdampfmenge so eingestellt wird, dass die anfallende Destillatmenge etwa 25 % der Trockensubstanz des zu destillierenden Extrakts ergibt.

9. Verfahren gemäss Anspruch 1, dadurch gekennzeichnet, dass der geklärte Extrakt unter Vakuum bei 55-70° C auf ca. 45 % Trockensubstanz eingedickt wird.

10. Verfahren gemäss Ansprüchen 1 und 9, dadurch gekennzeichnet, dass man das bei der Eindampfung anfallende Brüdenkondensat einer Umkehrosmosebehandlung unterzieht, und das erhaltene Konzentrat zusammen mit dem Destillat und Extrakt trocknet.

11. Verfahren gemäss den Ansprüchen 1 und 10, dadurch gekennzeichnet, dass die nicht gelösten Festoffe mit Wasser vermischt werden und ein zweites Mal der Aufschlämmungs-Extraktion, der Wasserdampfdestillation, der Separierung, der Eindampfung und der Umkehrosmose unterzogen werden.

12. Verfahren gemäss Anspruch 11, dadurch gekennzeichnet, dass die Extrakte, Destillate und Konzentrate der beiden Extraktionsstufen vermischt und getrocknet werden.

13. Vorrichtung zur Durchführung des Verfahrens gemäss Ansprüchen 1 bis 12, dadurch gekennzeichnet, dass sie aus folgenden durch Rohre verbundenen Elementen besteht:
   - einem Maischbehälter für die Enzymbehandlung,
   - einem Aufschlämmungs-Extraktor mit Mitteln zum Erhitzen und Druckhaltevorrichtung,
   - einer Destillationskolonne,
   - einem Separator,
   - einem Eindampfer,
   - einem Mittel zum Mischen und
   - einem Mittel zum Trocknen

14. Vorrichtung gemäss Anspruch 13, dadurch gekennzeichnet, dass sie zwischen dem Eindampfer und dem Mittel zum Mischen eine Umkehrosmosekolonne aufweist.

15. Vorrichtung gemäss Ansprüchen 13 oder 14, dadurch gekennzeichnet, dass das Mittel zum Erhitzen eine Dampfdüse, das Mittel zum Mischen ein Mischbehälter und das Mittel zum Trocknen ein System zum Sprühtrocknen oder Gefriertrocknen ist.

5

EP 0 263 335 B1

## Claims

1. A process for the production of a water-soluble extract having a bread-like aroma, characterized in that bread is baked, size-reduced and liquefied in water containing at least one enzyme, the bread mash obtained is subjected to suspension extraction and then to steam distillation to collect a distillate containing the readily volatile aromas, the undissolved solids are separated and the clarified extract is concentrated by evaporation and, finally, the distillate is dried together with the concentrated extract.

2. A process as claimed in claim 1, characterized in that starch-, pentosan- and glucan-degrading enzymes are used as the enzyme.

3. A process as claimed in claim 2, characterized in that $\propto$-amylase and $\beta$-glucanase are used.

4. A process as claimed in claim 2 or 3, characterized in that between 0.05 and 1% enzyme is used.

5. A process as claimed in claims 1 to 4, characterized in that the enzyme treatment lasts between 10 and 30 minutes.

6. A process as claimed in claims 1 to 5, characterized in that the ratio by weight of bread to water is between 1:1 and 1:10.

7. A process as claimed in claim 1, characterized in that the suspension extraction is carried out for 15 to 30 minutes at a temperature of 90 to 150° C.

8. A process as claimed in claim 1, characterized in that, in the steam distillation step, the quantity of steam is adjusted in such a way that the quantity of distillate accumulating contributes about 25% of the dry matter content of the extract to be distilled.

9. A process as claimed in claim 1, characterized in that the clarified extract is concentrated in vacuo at 55 to 70° C to a dry matter content of approximately 45%.

10. A process as claimed in claims 1 and 9, characterized in that the vapour condensate accumulating during concentration by evaporation is subjected to reverse osmosis and the concentrate obtained is dried together with the distillate and extract.

11. A process as claimed in claims 1 and 10, characterized in that the undissolved solids are mixed with water and subjected for a second time to suspension extraction, steam distillation, separation, concentration by evaporation and reverse osmosis.

12. A process as claimed in claim 11, characterized in that the extracts, distillates and concentrates of the two extraction stages are mixed and dried.

13. An apparatus for carrying out the process claimed in claims 1 to 12, characterized in that it consists of the following elements connected by tubes:
    - a mash tank for the enzyme treatment,
    - a suspension extractor with heating means and a pressure-retaining unit,
    - a distillation column,
    - a separator,
    - an evaporator,
    - mixing means and
    - drying means.

14. An apparatus as claimed in claim 13, characterized in that it comprises a reverse osmosis column between the evaporator and the mixing means.

15. An apparatus as claimed in claim 13 or 14, characterized in that the heating means is a steam nozzle, the mixing means is a mixing vessel and the drying means is a spray-drying or freeze-drying system.

6

**Revendications**

1. Procédé de production d'un extrait soluble dans l'eau ayant l'arôme du pain, caractérisé en ce qu'il consiste à faire cuire du pain, à le broyer, à le liquéfier dans l'eau à l'aide d'au moins un enzyme, à soumettre la bouillie de pain obtenue à une extraction de la suspension, à effectuer ensuite une distillation à la vapeur d'eau afin de recueillir un distillat obtenu avec les arômes très volatils, à séparer les substances solides non dissoutes et à concentrer par évaporation l'extrait clarifié, et finalement à sécher le distillat avec l'extrait concentré par évaporation.

2. Procédé selon la revendication 1, caractérisé en ce qu'il consiste à utiliser comme enzyme des enzymes qui dégradent l'amidon, le pentosane et le glucane.

3. Procédé selon la revendication 2, caractérisé en ce qu'il consiste à utiliser l'$\alpha$-amylase et la $\beta$-glucanase.

4. Procédé selon les revendications 2 ou 3, caractérisé en ce qu'on utilise entre 0,05 et 1 % d'enzyme.

5. Procédé selon les revendications 1 à 4, caractérisé en ce que le traitement aux enzymes dure entre 10 et 30 minutes.

6. Procédé selon les revendications 1 à 5, caractérisé en ce que le rapport en poids du pain à l'eau est compris entre 1:1 et 1:10.

7. Procédé selon la revendication 1, caractérisé en ce que l'extraction de la suspension est effectuée à une température comprise entre 90 et 150°C et pendant 15 à 30 minutes.

8. Procédé selon la revendication 1, caractérisé en ce que, lors de la distillation à la vapeur d'eau, la quantité de vapeur d'eau est réglée de manière que la quantité de distillat obtenue corresponde à environ 25 % de la susbstance sèche de l'extrait devant être distillé.

9. Procédé selon la revendication 1, caractérisé en ce que l'extrait clarifié est concentré sous vide à environ 45 % de substances sèches, à 55-70°c.

10. Procédé selon les revendications 1 et 9, caractérisé en ce qu'il consiste à soumettre le condensat de vapeurs chaudes provenant de la concentration par évaporation à un traitement d'osmose inverse et à sécher le concentré obtenu conjointement avec le distillat et l'extrait.

11. Procédé selon les revendications 1 et 10, caractérisé en ce qu'il consiste à mélanger les substances solides non dissoutes avec de l'eau et à les soumettre une seconde fois à l'extraction de la suspension, à la distillation à la vapeur d'eau, à la séparation, à la concentration par évaporation et à l'osmose inverse.

12. Procédé selon la revendication 11, caractérisé en ce qu'il consiste à mélanger et à sécher les extraits, distillats et concentrés des deux phases d'extraction.

13. Dispositif pour la mise en oeuvre du procédé selon les revendications 1 à 12, caractérisé en ce qu'il se compose des éléments suivants, reliés par des tuyaux :
    - une cuve à bouillie pour le traitement aux enzymes,
    - un extracteur de suspension équipé de moyens de chauffage et d'un dispositif de maintien en pression,
    - une colonne de distillation,
    - un séparateur,
    - un évaporateur
    - un moyen pour le mélange et
    - un moyen de séchage.

14. Dispositif selon la revendication 13, caractérisé en ce qu'il comprend une colonne d'osmose inverse montée entre l'évaporateur et le moyen pour le mélange.

15. Dispositif selon la revendication 13 ou 14, caractérisé en ce que le moyen de chauffage est un injecteur de vapeur d'eau, le moyen pour le mélange est une mélangeuse et le moyen de séchage, un système de séchage par pulvérisation ou par lyophilisation.

**FIG.**